# EUROPEAN PATENT APPLICATION

(11) **EP 1 722 148 A2**
(43) Date of publication of application: **15.11.2006**
(21) Application number: 05256850.8
(22) Date of filing: 04.11.2005
(51) Int. Cl.: F16M 13/02

(54) **Retractable fixture for portable visual electronic products**

(30) Priority: 12.05.2005 CN 200520058215
(71) Applicant: Silicon Pyramid Electron Ltd., Guangzhou (CN)
(72) Inventor: Hsiung, Chen Kuo, Guangzhou (CN)
(74) Representative: Power, Philippa Louise

(57) **Abstract**

A new retractable fixture for portable visual electronic products is composed of a fixing clip (1), a supporting rod (2) and a fixing base (3). The supporting rod is hinged to the fixing clip at one end and connected to the fixing base at the other. The fixing base is connected to the portable visual electronic product and the supporting rod is adjustable. This fixture quickly and easily adjusts the visual direction, angle and distance of portable visual electronic products and applies to common vehicles like various automobiles.

## Description

### Technical Field

The invention relates to an assembly for attachment to a stationary object, particularly a retractable fixture assembly for portable visual electronic products.

### Background of the Invention

Portable visual electronic products are getting ever more diversified, such as PDA, pocket TV and palmtop audio-visual recorder-player (like MP4). Among them is a portable VCD player that this Applicant claims under Patent No. 03267232.2, a Chinese utility model. Light and compact, these portable visual electronic products become very popular and have found wide applications in various vehicles, such as automobiles, airplanes and ships, making our life more enjoyable either on trips or at work. However, such products have to be held in a user's hands at present, which is very inconvenient for extended use or when their hands are otherwise engaged. In addition, the products may fall out of a user's hands and get damaged. It is therefore necessary to design a fixture assembly that can easily fix any portable visual electronic product to a stationary object, especially on a moving vehicle.

### Summary of the Invention

The purpose of the invention, at least in its preferred embodiments, is to provide a simple, reliable and easy-to-use retractable fixture free from the present technical defects of those being currently used for fixing portable visual electronic products on moving vehicles.

The invention provides a retractable fixture assembly for portable visual electronic products including an adjustable fixing clip means, an extendable supporting rod assembly and a fixing base assembly, means for hingedly connecting the fixing clip means to one end of the supporting rod assembly and means for connecting the fixing base assembly to the other end of the supporting rod assembly.

The supporting rod is preferably composed of internal and external sleeves and a spiral fixing block. The internal sleeve is preferably socketed into the external sleeve. The external sleeve preferably has threads outside, and on the external sleeve wall near the threads is a protruding pressure block. The spiral fixing block preferably has threads inside, through which the block is connected to the external sleeve. After being turned into the external sleeve, the spiral fixing block preferably presses against the pressure block protruding out of the wall of the external sleeve so that the pressure block is pressed against the inside of the external sleeve and against the internal sleeve, thus securing the internal and external sleeves together.

In another preferred embodiment, the external sleeve is threaded on its outside and notched regularly at its end so that the remaining part of the external sleeve can bend inward easily. In addition, the part close to the end inside the spiral fixing block is machined into a round (conical) hole. After the spiral fixing block is turned into the external sleeve, the round (conical) holes at its end radially press against the end of the external sleeve so that the external sleeve is pressed inside against the internal sleeve, thus securing the internal and external sleeves.

The fixing clip is preferably composed of two clamping rods and fastening screws, with threaded holes on one end of each clamping rod. The two clamping rods are preferably flexibly screwed together via the threaded holes at one end and are hinged to the supporting rod at the other. Specifically, the supporting rod is preferably connected to a round flat connecting block at one end. At both sides of the round flat connecting block spherical concavities are preferably arranged in a circle. The two clamping rods are also preferably connected to round connecting blocks at the ends. There are preferably springs inside the round connecting blocks. Between the round flat connecting block and the round connecting blocks are preferably small steel balls. With the springs, the round connecting blocks preferably press the small steel balls into the spherical concavities on both sides of the round flat connecting block of the supporting rod to circumferentially secure the round flat connecting block and round connecting blocks of the clamping blocks. In the centers of the round flat connecting block and round connecting blocks there are preferably holes, into which studs are inserted and connected to the nuts at the two ends to axially secure the round flat connecting block and round connecting blocks.

The number of the springs is preferably the same as that of the said small steel balls. The springs are preferably regularly distributed between the round flat connecting blocks and the round connecting blocks. Inside the round connecting blocks there are preferably some spring pressers that are screwed inside the round connecting blocks. On the pressers there are preferably regularly distributed round holes for holding and circumferentially fixing the springs.

Opposite the clamping rods there are preferably grooves, in which non-rigid pressure blocks (made of plastic or rubber) can be installed.

The grooves opposite the clamping rods are preferably arranged in two separate sections, each holding the said non-rigid pressure blocks.

On the outerside of the non-rigid pressure blocks there are preferably raised lines (such as meshed lines, strip lines and arc liners) for increasing the friction coefficient and improving the clamping effect.

On the edges of the grooves on the clamping rods there are preferably symmetrical notches (such as arc notches, square notches and triangle notches). The notches on two clamping rods can preferably close to form holes (round and square) passing through the clamping rods, and can serve to position the fixing rod vertically while clamping the fixing rod.

The internal sleeve of the supporting rod is preferably connected to the fixing base via the connecting block. Specifically, in the connecting block there may be holes, beside which are clamping pieces. There are preferably concave-convex threads on the surface of the internal sleeve. The internal sleeve preferably extends into the connecting block and is fixed axially. The internal sleeve is preferably circumferentially contact-connected to the clamping pieces via concave-convex threads, thus circumferentially securing the internal sleeve and the connecting block. The fixing base preferably provides convex contact surface of steel balls, through which the fixing base is embedded into the spherical concaves of the connecting block, to circumferentially secure the fixing base and the connecting block. In the end surface of the connecting block and the center of the convex contact surface of the steel balls on the fixing base there are preferably some holes, into which studs are inserted and connected to the nuts at the two ends to axially secure the fixing base and the connecting block.

The fixing base preferably includes a base body and a movable clamping piece (not shown). The base body preferably has a clamping flange, and the movable clamping piece is preferably screwed to the portable visual electronic product. The moveable clamping piece and the base body are preferably connected through the clamping flange and the clamping block located at the back of the movable clamp.

The base body of the fixing base preferably has an elastic stopper, which is located at one end of the clamping flange and can be locked after the movable clamping piece is clamped into the clamping base so as to prevent the portable visual electronic product from slipping.

This new retractable fixture preferably works in the following manner: The fixing clip of this fixture is preferably secured onto another fixed object (such as the connecting rod between the seat and head rest of a car) and then the portable visual electronic product is preferably connected to the fixing base of the fixture. To adjust the visual direction of the electronic product, turn the supporting rod relative to the fixing clip through the hinge connecting the supporting rod and fixing clip. To further adjust the visual angle, turn the connecting block relative to the supporting rod (or turn the internal sleeve relative to the external sleeve of the supporting rod). For visual electronic products with different screen directions, just turn the fixing base relative to the connecting block. To change the visual distance, adjust the length of the retractable supporting rod.

This new retractable fixture is superior to the existing technologies in the following respects: (1) Safe and reliable: This fixture can be used to fix a portable visual electronic product stably and reliably to enable a user to enjoy programs without holding it in their hands. The user no longer has to worry about the visual product falling out of their hands. Therefore, this technology provides convenience and safety at the same time. (2) Convenience and wide serviceability: This fixture works in various ways. It serves to flexibly and easily adjust the visual direction, angle and distance of the visual products. It applies to common vehicles like various automobiles. It is applicable to fixing all existing portable visual electronic products, such as PDA, pocket TV, palmtop audio-visual recorder-player and portable DVD player relative to a stationary support. This fixture promises bright market prospect.

Preferred embodiments of the invention will now be described, by way of example only and with reference to the accompanying drawings in which:
Figure 1 is a perspective view showing a retractable fixture according to the invention in the open position;
Figure 2 is an exploded perspective view of the retractable fixture shown in Figure 1;
Figure 3 is an exploded view of the retractable fixture as shown in Figure 1, but rotated 90°;
Figure 4 is a perspective view of the retractable fixture of Figure 1 shown in the closed position; and
Figure 5 is an enlarged exploded perspective view showing the details of the connection between the block assembly and the base assembly.

### Detailed Description of the Drawings

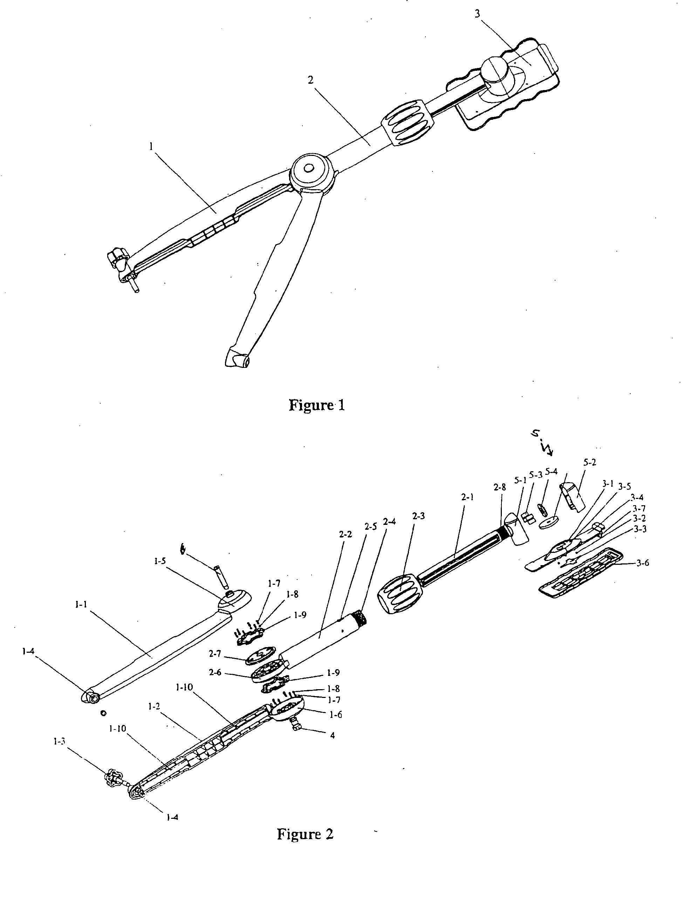

Figure 1 shows a retractable fixture for portable visual electronic products according to the invention. It may be seen from Figure 1 that the retractable fixture is composed of a fixing clip 1, supporting rod 2 and fixing base 3. The supporting rod 2 is hinged to the fixing clip 1 at one end and connected to the fixing base 3 at the other. The fixing base 3 is connected to the portable visual electronic product (not shown in the figures), and the supporting rod 2 is retractable.

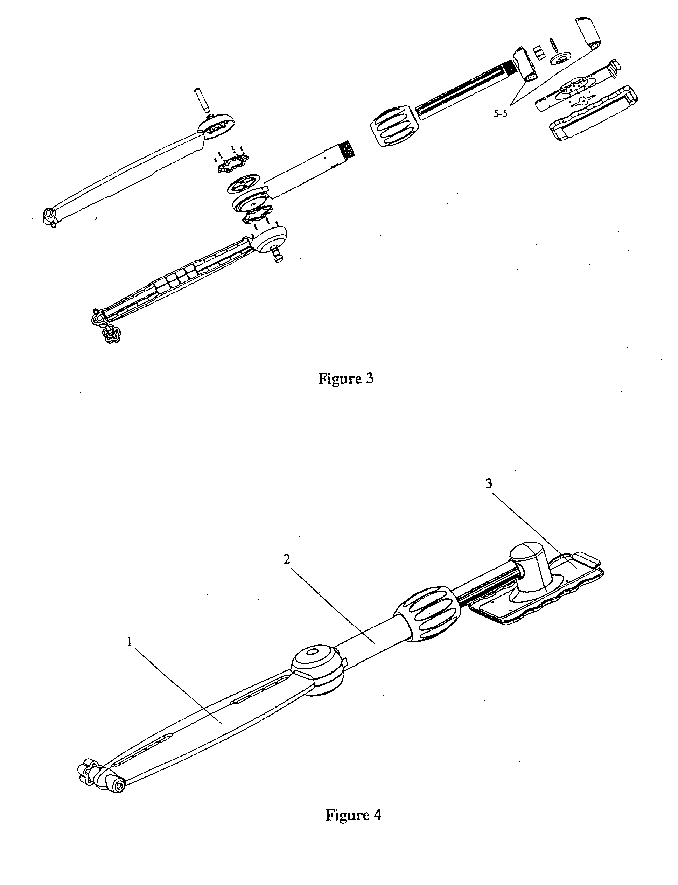

The structure of the supporting rod 2, shown in Figures 2 and 3, is composed of internal and external sleeves 2-1 and 2-2 and a spiral fixing block 2-3. The internal sleeve 2-1 is socketed into the external sleeve 2-2. The external sleeve 2-2 has threads 2-4 outside, and in the wall of the external sleeve 2-2 near the threads 2-4 is a protruding pressure block 2-5. The spiral fixing block 2-3 has threads inside, through which the block is connected to the external sleeve 2-2.

After being turned into the external sleeve 2-2, the spiral fixing block 2-3 presses against the pressure block 2-5 protruding out of the wall of the external sleeve 2-2 so that the pressure block is pressed against the inside of the external sleeve 2-2 and against the internal sleeve 2-1, thus securing the internal sleeve 2-1 and external sleeve 2-2.

The fixing clip 1 is composed of two clamping rods 1-1 and 1-2 and fastening screw 1-3, with threaded hole 1-4 on one end of clamping rod 1-1 or 1-2. The two clamping rods 1-1 and 1-2 are flexibly connected with the fastening screw 1-3 via the threaded holes at one end and are hinged to the supporting rod at the other end. Specifically, the supporting rod 2 is connected to a round flat connecting block 2-6 at one end. At both sides of the round flat connecting block 2 -6 are spherical concavities 2-7 arranged in a circle. The two clamping rods 1-1 and 1-2 are also connected to the round connecting blocks 1-5 and 1-6 at the ends. There are springs 1-7 inside the round connecting blocks 1-5 and 1-6. Between the round flat connecting block 2-6 and the round connecting blocks 1-5 and 1-6 are small steel balls 1-8. With the springs 1-7, the round connecting blocks 1-5 and 1-6 press the small steel balls 1-8 into the spherical concavities 2-7 on both sides of the round flat connecting block 2-6 to circumferentially secure the round flat connecting block 2-6 and round connecting blocks 1-5 and 1-6.

In the centers of the round flat connecting block 2-6 and round connecting blocks 1-5 and 1-6 are holes, into which stud 6 is inserted and connected to the nut 4 to axially secure the round flat connecting block 2-6 and round connecting blocks 1-5 and 1-6. The number of the springs 1-7 is the same as that of the small steel balls 1-8. The springs are regularly distributed between the round flat connecting block 2-6 and the round connecting blocks 1-5 and 1-6. Inside the round connecting blocks 1-5 and 1-6 are spring pressers 1-9 that are screwed inside the round connecting blocks 1-5 and 1-6. The pressers 1-9 are provided with regularly distributed round holes for holding and circumferentially fixing the springs 1-7.

Opposite the clamping rods 1-1 and 1-2 are grooves in two sections, in which non-rigid pressure blocks 1-10 (made of plastic or rubber) can be installed. On the outer sides of the non-rigid pressure blocks 1-10 are raised lines (such as meshed lines, strip lines and arc lines) for increasing the friction coefficient and improving the clamping effect.

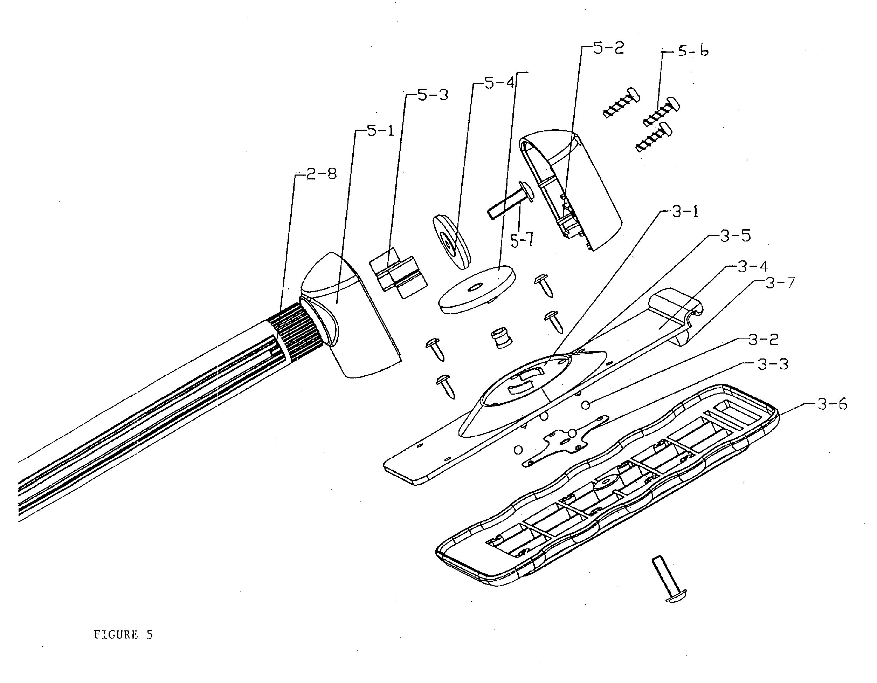

The internal sleeve 2-1 of the supporting rod 2 is connected to fixing base 3 via the connecting block 5, as shown in Figures 2, and 5. The connecting block 5 consists of two pails 5-1 and 5-2. There are holes in the connecting block part 5-1, and clamp pieces 5-3 beside the holes inside connecting block part 5-1. The connecting block parts are secured together by fasteners 5-6. There are concave-convex threads 2-8 on the surface of the internal sleeve 2-1.

The internal sleeve 2-1 extends into the connecting block part 5-1 and is fixed axially with cover 5-4 by bolt 5-7. The internal sleeve 2-1 is circumferentially contact-connected to the clamping pieces 5-3 via concave-convex threads to circumferentially secure the internal sleeve 2-1 and the connecting block 5. There are spherical concavities 5-5 arranged in a circle on the end surfaces of the connecting block 5, as shown in Figure 3.

The fixing base 3 provides the convex contact surfaces 3-1 of steel balls, through which the fixing base 3 is embedded into the spherical concavities 5-5 of the connecting block 5, to circumferentially secure the fixing base 3 and the connecting block 5. The convex contact surfaces 3-1 of the steel balls of the fixing base 3 presses the steel balls through presser 3-3 against the base body 3-4 of the fixing base 3, which steel balls 3-2 stick partially out of the holes 3-5 of the base body 3-4. On the end surface of connecting block 5 and in the center of the convex contact surfaces 3-1 of the steel balls on the fixing base 3 are holes, into which studs are inserted and connected to nuts (not shown) to axially fix the fixing base 3 and the connecting block 5.

The fixing base 3 includes the fixing base body 3-4 and movable clamping piece (not shown in the figures). The base body 3-4 has a clamping flange 3-6, to be connected to the movable clamping piece that is screwed to the portable visual electronic product (not shown in the figures). The moveable clamping piece and the base body 3-4 are connected through the clamping flange 3-6 and the clamping block located at the back of the moveable clamping piece (not shown). The base body of the fixing base has an elastic stopper 3-7, which is located at one end of the clamping flange 3-6 and can be locked after the movable clamping piece is clamped into the base body 3-4 so as to prevent the portable visual electronic product from slipping.

This retractable fixture is utilized as follows:
The fixing clip 1 of the fixture is secured to another fixed object such as the connecting rod between the seat and head rest of a car. Following this the portable visual electronic product is clamped onto the fixing base 3 that is secured to the fixed object, the fixture being in the closed position as shown in Figure 4. To adjust the visual direction, the supporting rod 2 is moved relative to the fixing clip 1 through the hinge mechanism connecting them together. To adjust the visual angle, the connecting block 5 is turned relative to the supporting rod 2 (or the internal sleeve 1-2 is turned relative to the external sleeve 2-2 of the supporting rod 2). For visual electronic products with different screen directions, the fixing base 3 is merely turned relative to the connecting block 5. To change the visual distance, the length of the retractable supporting rod 2 can be adjusted by moving the internal sleeve 2-1 relative to the external sleeve 2-2.

It is intended to cover by the appended claims all embodiments that fall within the scope of the invention.

## Claims

1. A retractable fixture assembly for portable visual electronic products including an adjustable fixing clip means (1), an extendable supporting rod assembly (2) and a fixing base assembly (3), means for hingedly connecting the fixing clip means to one end of the supporting rod assembly and means (5) for connecting the fixing base assembly to the other end of the supporting rod assembly.

2. A retractable fixture assembly as claimed in Claim 1, wherein the supporting rod assembly (2) comprises relatively movable internal (2-1) and external (2-2) sleeves and a spiral fixing block (2-3), the external sleeve has external threads (2-4) and a protruding pressure block (2-5) adjacent thereto, the fixing block includes internal threads by which it is connected to the external sleeve in use, and wherein in use, after the sleeves are relatively moved to a preselected position the spiral fixing block is adjusted to engage the pressure block to act against the internal sleeve to secure the sleeves and thus, the supporting rod assembly in the desired position.

3. A retractable fixture assembly as claimed in Claim 1, wherein the supporting rod assembly (2) consists of internal (2-1) and external (2-2) sleeves and a spiral fixing block (2-3) adapted to be threaded on the external sleeve, and wherein said external sleeve is threaded on its outside and defines notches at its end to permit inward bending thereof, said fixing block defining a conical opening whereby when the block is moved on said external sleeve the external sleeve is pressed inwardly against the internal sleeve to secure the internal and external sleeves relative to each other.

4. A retractable fixture assembly as claimed in Claim 1, wherein the fixing clip means (1) comprises two clamping rods (1-1,1-2) that are hingedly connected to the supporting rod assembly (2) at one end thereof and means are provided at the other end of the clamping rods to affix the clamping rods to a support member to secure the portable electronic product to be secured to the fixture assembly in a fixed position relative to the support member.

5. A retractable fixture assembly as claimed in Claim 4, wherein the means for hinging the fixing clip means (1) to the supporting rod assembly (2) include a first connecting block means (2-6) that defines spherical concavities arranged in a circle at both sides thereof, and the clamping rods include second connecting block means (1-5, 1-6) adapted to be located on both sides of the first connecting block means in use and including spring means (1-7) therein, and disposed between the first and each of the second connecting block means are small steel balls (1-8), wherein in use said springs act to press the small steel balls into said spherical concavities to circumferentially connect said blocks together, and means (4,6) are provided to secure said blocks together.

6. A retractable fixture assembly as claimed in Claim 5, wherein said springs (1-7) and said small steel balls (1-8) are identical in number and the springs are regularly distributed between said first (2-6) and second (1-5, 1-6) connecting blocks and spring pressers (1-9) are disposed inside each of the second connecting blocks and the pressers define regularly distributed round holes for holding the springs.

7. A retractable fixture assembly as claimed in any preceding Claim, wherein the supporting rod assembly (2) comprises relatively movable internal (2-1) and external (2-2) sleeves, and the means (5) for connecting the fixing base assembly (3) to the other end of the supporting rod assembly includes a connecting block assembly and means for connecting the internal sleeve to said connecting block assembly.

8. A retractable fixture assembly as claimed in Claim 7, wherein the means for connecting the internal sleeve (2-1) to the connecting block assembly includes holes defined by said connecting block assembly, clamping pieces (5-3) disposed adjacent said holes and means for securing said clamping pieces to said internal sleeve.

9. A retractable fixture assembly as claimed in Claim 8, wherein the connecting block assembly defines spherical concave surfaces on an end portion of the connecting block assembly and the fixing base assembly (3) defines a convex contacting surface (3-1) of steel balls through which the fixing base is embedded into the spherical concavities of the connecting block to circumferentially secure the fixing base and the connecting block, wherein the end surface of the connecting block and the center of the convex contact surface defines holes, and fastening means including studs extend through said holes in use for axially securing the fixing base to the connecting block.

10. A retractable fixture assembly as claimed in Claim 9, wherein the convex contact surface (3-1) of steel balls is formed by presser means (3-3) pressing the steel balls (3-2) against one side of the fixing base partially out of the holes to engage the concave surfaces (3-1) defined by the connecting block assembly.

11. A retractable fixture assembly as claimed in Claim 10, wherein the fixing base (3) includes a base body assembly (3-4) adapted to be connected to a movable clamping piece connected to the portable electronic product to which the fixture assembly is to be connected, the base body assembly including a clamping flange (3-6) and an elastic stopper (3-7) located at one end of the clamping flange whereby in use the movable clamping piece and the base body are connected through the clamping flange and a clamping block located at the back of the movable clamping piece.
